# EUROPÄISCHE PATENTSCHRIFT

(11) **EP 2 600 965 B1**
(45) Veröffentlichungstag und Bekanntmachung des Hinweises auf die Patenterteilung: **15.11.2017**
(21) Anmeldenummer: 11739013.8
(22) Anmeldetag: 11.07.2011
(51) Int. Cl.: B01J 20/18, B01J 20/26, B01J 20/28, B01J 20/30, C08K 3/34, G01D 11/24, G01L 13/00, G01L 19/06

(54) **KOMPOSITWERKSTOFF, FORMKÖRPER, ELEKTRONISCHES GERÄT MIT FORMKÖRPER, UND VERFAHREN ZUR HERSTELLUNG EINES FORMKÖRPERS**
COMPOSITE MATERIAL, MOULDING, ELECTRONIC UNIT COMPRISING MOULDING, AND PROCESS FOR PRODUCING A MOULDING
MATÉRIAU COMPOSITE, CORPS FAÇONNÉ, APPAREIL ÉLECTRONIQUE COMPORTANT LE CORPS FAÇONNÉ ET PROCÉDÉ DE FABRICATION D'UN CORPS FAÇONNÉ

(30) Priorität: 05.08.2010 DE 102010038986
(43) Veröffentlichungstag der Anmeldung: 12.06.2013
(73) Patentinhaber: Endress+Hauser GmbH+Co. KG, 79689 Maulburg (DE)
(72) Erfinder: LOPATIN, Sergej, 79540 Lörrach (DE); UEHLIN, Thomas, 79650 Schopfheim (DE); GUGENBERGER, Alexander, 79540 Lörrach (DE); HÜGEL, Michael, 79541 Lörrach (DE); ROßBERG, Andreas, 79713 Bad Säckingen (DE)
(74) Vertreter: Andres, Angelika Maria
(86) Internationale Anmeldenummer: PCT/EP2011/061721
(87) Internationale Veröffentlichungsnummer: WO 2012/016796

(56) Entgegenhaltungen:
- EP-A1- 1 323 468
- EP-A1- 1 745 845
- SUER M G ET AL: "GAS PERMEATION CHARACTERISTICS OF POLYMER-ZEOLITE MIXED MATRIX MEMBRANES", JOURNAL OF MEMBRANE SCIENCE, ELSEVIER SCIENTIFIC PUBL.COMPANY. AMSTERDAM, NL, Bd. 91, Nr. 1/02, 20. Mai 1994 (1994-05-20), Seiten 77-86, XP000490083, ISSN: 0376-7388, DOI: 10.1016/0376-7388(94)00018-2

## Beschreibung

Die vorliegende Erfindung betrifft einen Kompositwerkstoff, einen Formkörper umfassend einen solchen Kompositwerkstoff, ein elektronisches Gerät umfassend einen solchen Formkörper, und ein Verfahren zur Herstellung eines solchen Formkörpers.

Elektronische Geräte weisen häufig bauartbedingt ein Gehäuse auf, in welches Feuchtigkeit in Form von Wasserdampf eindringen kann. Kondensation dieses Wasserdampfs auf Schaltungskomponenten im Innern des Gehäuses, kann zur Beeinträchtigung bzw. zum Ausfall von Geräten führen. Es ist daher erforderlich, dieses zu langfristig verhindern.

Hierzu ist es bekannt, Feuchtefilter in Gehäuseöffnungen vorzusehen, oder Absorber im Gehäuse anzuordnen. Die beschriebenen Adsorber erweisen sich aber für den langfristigen Einsatz insbesondere unter Temperaturwechseln als nicht zufriedenstellend.

Aus EP 1 323 468 A1 sind plattenförmige Formkörper bekannt, welche eine Polymermatrix aus Polyamid sowie weiterhin Zeolith 4A aufweisen. Diese Formkörper dienen der Entfernung von gasförmigem Wasser u.a. aus Brennstoffzellen.

Es ist daher die Aufgabe der vorliegenden Erfindung, hier Abhilfe zu schaffen.

Die Aufgabe wird erfindungsgemäß gelöst durch den Kompositwerkstoff gemäß Anspruch 1, den Formkörper gemäß Anspruch 5, das elektronische Gerät gemäß Anspruch 8 und das Verfahren zur Herstellung eines Formkörpers gemäß Anspruch 12. Der erfindungsgemäße Kompositwerkstoff umfasst: eine Polymermatrix; und ein Zeolith, welches in der Polymermatrix gebunden ist; wobei der Volumenanteil des Zeoliths am Volumen des Kompositwerkstoffs mindestens 50%, insbesondere mindestens 65% beträgt, wobei die Polymermatrix ein Polymer aufweist, welches ausgewählt ist aus einer Gruppe von Polymeren die aus Fluor-Kunststoffen besteht.

Die Fluor-Kunststoffe umfassen erfindungsgemäß PTFE bzw. Polytetrafluoretylen, PCTFE bzw. Polychlortrifluorethylen, ECTFE bzw. Ethylenchlortrifluorethylen oder Ethylen-Chlortrifluorethylen-Fluorcopolymer, FEP bzw. Fluorethylenpropylen, PFA bzw. Perfluoroalkoxylalkan sowie PVDF bzw. Polyvinylidenfluorid.

In einer Weiterbildung der Erfindung umfasst das Zeolith eine Stoffgruppe auf Alumosilikat-Basis mit einer Struktur von Zeolith Typ A, insbesondere ein Zeolith 4A oder ein Zeolith 3A.

In einer Weiterbildung der Erfindung beträgt die Dichte des Werkstoffs im getrockneten Zustand nicht mehr als 1,7 g/cm³, insbesondere nicht mehr als 1,5 g/cm³.

In einer Weiterbildung der Erfindung beträgt die mittlere Packungsdichte des Zeoliths in dem Werkstoff im trockenen Zustand nicht weniger als 0,8 g/cm³, insbesondere nicht weniger als 1,0 g/cm³ beträgt.

Der erfindungsgemäße Formkörper umfasst einen erfindungsgemäßen Kompositwerkstoff.

In einer Weiterbildung der Erfindung gilt für das Volumen Vₘᵢₙ einer minimalen konvexen Umhüllenden des Formkörpers und für die Oberfläche Aₘᵢₙ der minimalen konvexen Umhüllenden (Vₘᵢₙ)²¹³ / Aₘᵢₙ > 1/20, insbesondere > 1/10.

In einer Weiterbildung der Erfindung gilt für das Volumen Vₖ des Formkörpers und für die Oberfläche Aₖ des Formkörpers (Vₖ)^{2/3} / Aₖ > 1/30, insbesondere > 1/20 > 1/15.

Das erfindungsgemäße elektronische Gerät, welches insbesondere ein Messgerät sein kann, weist mindestens ein Gehäuse mit mindestens einem Innenraum, welcher eine elektronische Schaltung enthält, wobei das Gerät mindestens einen Gaspfad aufweist, über welchen Wasserdampf in das Gehäuse gelangen kann, wobei das Gerät erfindungsgemäß mindestens einen erfindungsgemäßen Formkörper aufweist, wobei der Formkörper insbesondere in dem Innenraum angeordnet sein kann.

Das elektronische Gerät kann erfindungsgemäß insbesondere ein Messgerät sein. Solche Messgeräte können insbesondere Messgeräte der industriellen Prozessmesstechnik sein. Derartige Messgeräte, weisen gewöhnlich einen Sensor und eine elektronische Schaltung auf, welche die Signale des Sensors aufbereitet und zur Ausgabe an einer Anzeige oder an ein Leitsystem bereitstellt. Solche Messgeräte können insbesondere Messgeräte für Druck, Füllstand, Durchfluss, Temperatur, pH, und andere Analyseparameter umfassen.

Feuchteprobleme können bei diesen Messgeräten an beliebigen Stellen auftreten, insbesondere die Elektronik und das Sensorelement sind vor Feuchteeinflüssen zu schützen.

Unter den Druckmessgeräten sind soche mit einem Relativdrucksensor zum Messen der Differenz zwischen einem Mediendruck und einem Atmosphärendruck in der Umgebung des Sensors von besonderem Interesse, wobei solche Geräte einen Atmosphärendruckpfad aufweisen, um den Relativdrucksensor mit dem Atmosphärendruck zu beaufschlagen, wobei der Atmosphärendruckpfad insbesondere durch den Formkörper verläuft.

Allgemein ist die Erfindung auch für jegliche elektronische Geräte relevant, die insbesondere hochohmige Schaltungen unter Einfluss von Feuchtigkeit und Kondensatbildung aufweisen. Solche Geräte sind beispielsweise Hydrophone, Ultraschallwandler, Mikrophone, Elektretmikrophone und jegliche kapazitive Wandler.

Gemäß einer Weiterbildung der Erfindung beträgt das Volumen des Formkörpers nicht weniger als 20 %, vorzugsweise nicht weniger als 40% und besonders bevorzugt nicht weniger als 50% des freien Volumens des Innenraums.

Das erfindungsgemäße Verfahren zum Herstellen eines erfindungsgemäßen Formkörpers umfasst: Herstellen einer Dispersion, welche Partikel eines Polymers zum Bilden einer Polymermatrix und Zeolith, enthält;
Formgebung aus der Dispersion; und
Verfestigen des Formkörpers.

In einer Ausgestaltung umfasst die Formgebung Trocknen der Dispersion; Pressen der getrockneten Dispersion in eine Form zur Formung des Formkörpers. Das Verfestigen kann in dieser Ausgestaltung beispielsweise Sintern umfassen.

Allgemein kann das Verfestigen neben Sintern auch Brennen oder Polymerisieren umfassen.

Andere erfindungsgemäße Verfahren der Formgebung umfassen Gießen, insbesondere Spritzgießen, und Extrudieren.

Die Erfindung wird nun anhand der in den Zeichnungen dargestellten Ausführungsbeispiele näher erläutert. Es zeigt:
- Fig. 1:: die Dichte des trockenen Kompositwerkstoffs eines Ausführungsbeispiels in Abhängigkeit vom Zeolithgehalt;
- Fig. 2:: die Packungsdiche des Zeoliths im Kompositwerkstoff gemäß dem Ausführungsbeispiel;
- Fig. 3:: die Wasseraufnahme pro Volumeneinheit des Kompositwerkstoffs gemäß dem Ausführungsbeispiel;
- Fig. 4:: die Wasseraufnahme in Masse-%; und
- Fig. 5:: einen schematischen Längsschnitt durch ein Ausführungsbeispiel eines erfindungsgemäßen Relativdruckmessumformers.

Als Zeolith wurde in diesem Ausführungsbeispiel Zeolith Purmol 4ST (Z4A) oder 3ST (Z3A) von der Fa. Zeochem ausgewählt. Beide Zeolithen sind ein weißes Pulver, das in einem trockenen Zustand stark exotherm mit Wasser reagiert. Die Wasseraufnahme des Pulvers Z4A beträgt 24 Masse-% bei 50% rel. Feuchte und 20°C in 24 St. Für Pulver Z3A beträgt die maximale Wasseraufnahme unter gleichen Bedingungen 22 Masse-%.

Als Polymer für die Polymermatrix wurde in diesem Ausführungsbeispiel PFA eingesetzt, welches als wässrige Dispersion DuPont Teflon PFA TE-7224 verwendet wurde. Diese Dispersion hat 60,4 Masse-% PFA-Nanopartikeln (50 - 500 nm), ca. 5 Masse-% nichtionischen Tenside und Wasser. Die Viskosität liegt bei 20 cP. Der pH-Wert beträgt 10, was hinreichend gut den Erfordernissen an den pH-Wert des Zeolithes Z4A im Wasser entspricht (pH 10,3). Die Dispersion wird bei 100-120°C völlig getrocknet, bei 250-290°C werden Tenside pyrolysiert, bei 305-340°C schmelzen die PFA-Partikel und bilden eine 3D-Vernetzung im Kompositwerkstoff.

Die Zusammensetzung des Kompositwerkstoffs ist mit einem Volumenanteil von dem aktiven Stoff Z4A im Trockenzustand bestimmt.

Da die PFA-Dispersion auf Wasserbasis ist, soll Z4A mit Wasser voll gesättigt werden bevor es mit der PFA-Dispersion zusammen gemischt wird.

Tabelle 1 zeigt die Zusammensetzung der Komponenten für Diespersionswerkstoffe mit einem bestimmten Volumenanteil von Z4A.

**Tabelle 1.**

| Zeolith 4A, Vol.% | Z4AxH2O, Masse-% | PFA-Dispers, Masse-% | Wasser, Masse-% |
|---|---|---|---|
| 50 | 44.7 | 55.3 | 0.0 |
| 60 | 53.8 | 44.3 | 2.0 |
| 65 | 57.1 | 38.0 | 4.9 |
| 70 | 59.6 | 31.5 | 8.9 |
| 75 | 61.5 | 25.3 | 13.2 |
| 80 | 62.3 | 19.2 | 18.4 |

Die Komponenten sollen in einem Behälter im flüssigen Zustand gut zusammen gemischt werden und bei 120°C getrocknet werden. Die trockene Mischung kann direkt ohne Bindemittel in einer Form gepresst werden. Ein typischer Pressdruck liegt beispielsweise im Bereich von 25 MPa bis 100 MPa. Die gepressten Formkörper können beispielsweise mit dem folgenden Temperaturprofil gesintert werden:
- Aufheizen in 2 h von Raumtemperatur auf 290°C
- Aufheizen in 2 h von 290°C auf 320°C
- Aufheizen in 1,5 h von 320°C auf 340°C.

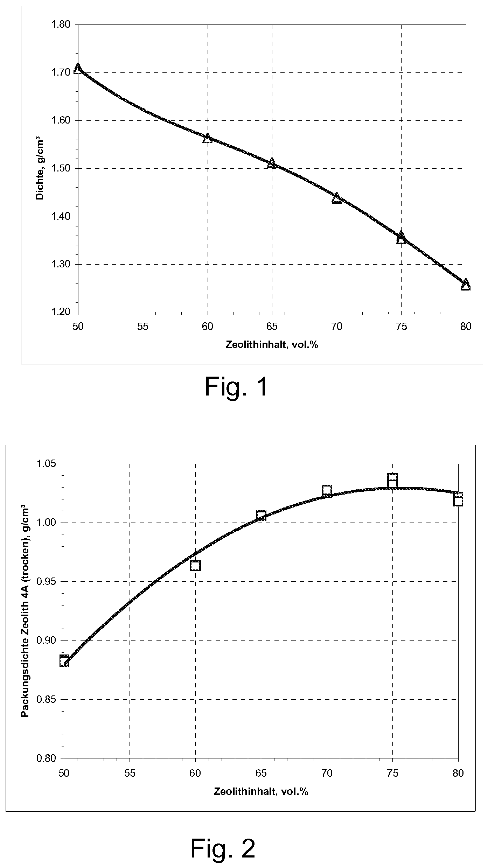

Fig. 1 zeigt typische Dichtewerte für den trockenen Kompositwerkstoff des Ausführungsbeispiels in Abhängigkeit von Zeolithinhalt.

Die Packungsdiche des Zeoliths im Kompositwerkstoff gemäß dem Ausführungsbeispiel ist in Fig. 2 dargestellt. Die Packungsdichte ist eine wichtige Eigenschaft für die Kapazität zur Wasseraufnahme, und sie zeigt, wie viel Zeolith sich in 1 cm³ des Kompositwerkstoffs befindet.

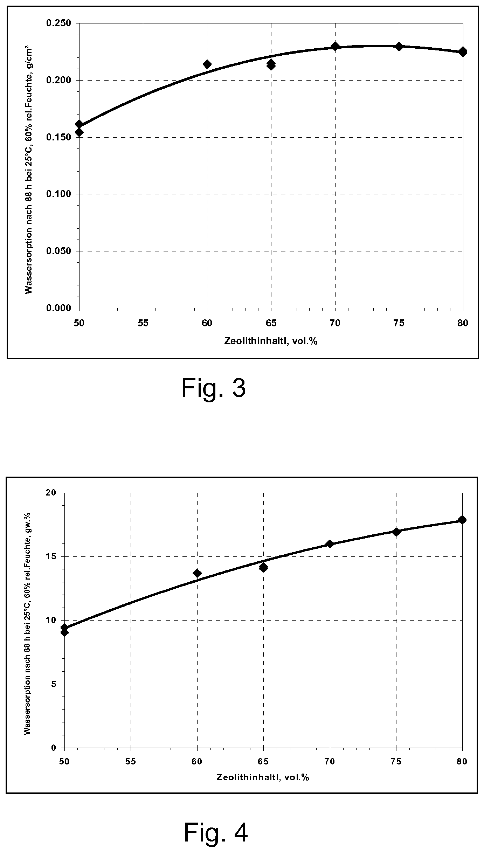

Die optimalen Kompositwerkstoffe entsprechen einem Zeolithinhalt von 65 vol.% bis 80 vol.%. Für diesen Bereich ändert sich die Zeolith-Packungsdichte wenig und eine Wasseraufnahme pro Volumeneinheit des Kompositwerkstoffs bleibt im Wesentlichen konstant, wie in Fig. 3 dargestellt ist. Im genannten Bereich für den Zeolithgehalt erreicht man damit eine gewisse Robustheit gegenüber leichten Schwankungen der Produktzusammensetzung.

Fig. 3 zeigt die Wasseraufnahme in Gramm pro 1 cm³ des Kompositwerkstoffs. Für den optimalen Bereich liegt die Wasseraufnahme bei etwa 0,23 g/cm³ oder 14 - 18 Masse-%, wie in Fig. 4 dargestellt ist. Zum Vergleich ist zu beachten, dass marktgängige, granulierte Zeolithen eine Wasseraufnahme von etwa 0,17 g/cm³ oder 24 Masse-% aufweisen, und damit auf das Volumen bezogen eine um ca. 25% geringere Trocknungskapazität aufweisen als der Kompositwerkstoff des Ausführungsbeispiels.

Die erfindungsgemäßen Kompositwerkstoffe unterscheiden sich mit wechselnder Zusammensetzung auch in der mechanischen Stabilität, welche mit einem steigenden Zeolithanteil abnimmt. Die Kompositwerkstoffe mit bis 75 vol.% Zeolith sind mechanisch stabil und hart. Ab 75 vol.% sind die Kompositwerkstoffe bzw. die Formkörper weich und leicht brüchig. Eine derzeit bevorzugte Kombinationen von mechanischer Stabilität und günstiger Wasseraufnahme liegt bei einem Material mit 60 - 70 vol.% Zeolith.

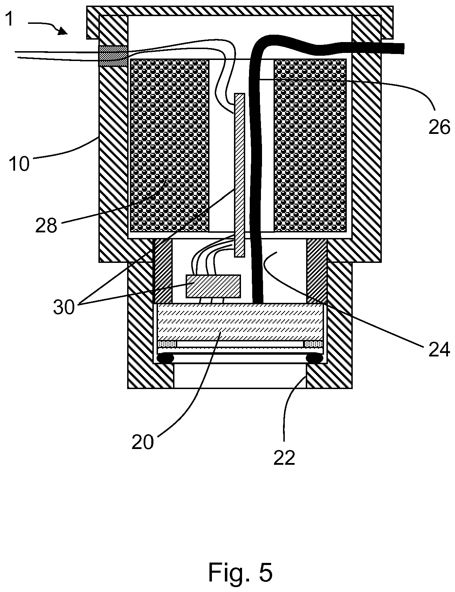

Der in Fig. 5 gezeigte Relativdruckmessumformer 1 umfasst ein Gehäuse 10 und einen Relativdrucksensor 20, welcher in dem Gehäuese angeordnet und über eine Gehäuseöffnung 22 mit einem Mediendruck beaufschlagbar ist. Durch einen Innenraum 24 des Gehäuses erstreckt sich ein Referenzluftpfad 26, der einen Schlauch aufweist, wobei der Referenzluftpfad durch einen erfindungsgemäßen Formkörper 28 verläuft, der in dem Innenraum 24 angeordnet ist. Der Innenraum 24 enthält weiterhin eine Verarbeitungsschaltung 30 von Signalen des Relativdrucksensors, und zur Ausgabe eines Signals, welches den Relativdruck repräsentiert, an ein Leitsystem. Der Formkörper 28 nimmt mindesten 40% des freien Volumens des Innenraums 24 ein, und ist somit in der Lage, über die Referenzluft oder Spalte zwischen Baugruppen eindringende Feuchtigkeit zu adsorbieren, und damit eine Kondensation von Wasser auf der Verarbeitungsschaltung 30 über einen Zeitraum von Jahren zu verhindern.

## Patentansprüche

1. Kompositwerkstoff, umfassend
eine Polymermatrix; und
Zeolith, welches in der Polymermatrix gebunden ist;
wobei der Volumenanteil des Zeoliths am Volumen des Kompositwerkstoffs mindestens 50%, insbesondere mindestens 65% beträgt, wobei die Polymermatrix ein Polymer aufweist, welches ausgewählt ist aus einer Gruppe von Polymeren die aus Fluor-Kunststoffen besteht.

2. Kompositwerkstoff nach Anspruch 1 oder 2, wobei das Zeolith ein Zeolith des Typs A, insbesondere ein Zeolith 4A oder 3A umfasst.

3. Kompositwerkstoff nach einem der vorhergehenden Ansprüche, wobei die mittlere Dichte des Werkstoffs im getrockneten Zustand nicht mehr als 1,7 g/cm³, insbesondere nicht mehr als 1,5 g/cm³ beträgt.

4. Kompositwerkstoff nach einem der vorhergehenden Ansprüche, wobei die Packungsdichte des Zeoliths in dem Werkstoff im trockenen Zustand nicht weniger als 0,8 g/cm³, insbesondere nicht weniger als 1,0 g/cm³ beträgt.

5. Formkörper, umfassend einen Kompositwerkstoff nach einem der vorhergehenden Ansprüche.

6. Formkörper nach Anspruch 5, wobei für das Volumen Vₘᵢₙ einer minimalen konvexen Umhüllenden des Formkörpers und für die Oberfläche Aₘᵢₙ der minimalen konvexen Umhüllenden gilt: (Vₘᵢₙ)^{2/3} / Aₘᵢₙ > 1/20, insbesondere > 1/10.

7. Formkörper nach Anspruch 5 oder 6, wobei für das Volumen Vₖ des Formkörpers und für die Oberfläche Aₖ des Formkörpers gilt: (Vₖ)^{2/3} / Aₖ > 1/30, insbesondere > 1/20, vorzugsweise Aₖ > 1/15.

8. Elektronisches Gerät, insbesondere Messgerät, welches mindestens ein Gehäuse mit mindestens einem Innenraum aufweist, welcher eine elektronische Schaltung enthält, wobei das Gerät mindestens einen Gaspfad aufweist, über welchen Wasserdampf in das Gehäuse gelangen kann, **dadurch gekennzeichnet, dass** das Gerät mindestens einen Formkörper nach einem der Ansprüche 6 bis 8 aufweist.

9. Elektronisches Gerät nach Anspruch 8, wobei der Formkörper in dem Innenraum angeordnet ist.

10. Elektronisches Gerät nach Anspruch 8 oder 9, wobei das Gerät einen Relativdrucksensor zum Messen der Differenz zwischen einem Mediendruck und einem Atmosphärendruck in der Umgebung des Sensors aufweist, wobei das Gerät einen Atmosphärendruckpfad aufweist, um den Drucksensor mit dem Atmosphärendruck zu beaufschlagen, wobei der Atmosphärendruckpfad insbesondere durch den Formkörper verläuft.

11. Elektronisches Gerät nach einem der Ansprüche 9 bis 10, wobei das Volumen des Formkörpers nicht weniger als 20 %, vorzugsweise nicht weniger als 40% und besonders bevorzugt nicht weniger als 60% des freien Volumens des Innenraums beträgt.

12. Verfahren zum Herstellen eines Formkörpers nach einem der Ansprüche 5 bis 7, umfassend: Herstellen einer Dispersion, welche Partikel eines Polymers zum Bilden einer Polymermatrix und Zeolith, enthält;
Formgebung aus der Dispersion; und
Verfestigen des Formkörpers.

## Claims

1. Composite material, comprising
a polymer matrix; and
zeolite, which is bonded in the polymer matrix;
wherein the share of the volume of the zeolite in the volume of the composite material is at least 50%, particularly at least 65%, wherein the polymer matrix has a polymer which is selected from a group of polymers that consist of fluoroplastics.

2. Composite material as claimed in Claim 1 or 2, wherein the zeolite comprises a type A zeolite, particularly a 4A or 3A zeolite.

3. Composite material as claimed in one of the previous claims, wherein the average density of the material in the dry state is not more than 1.7 g/cm³, particularly not more than 1.5 g/cm³.

4. Composite material as claimed in one of the previous claims, wherein the packing density of the zeolite in the material in the dry state is not less than 0.8 g/cm³, preferably not less than 1.0 g/cm³.

5. Molded body, comprising a composite material as claimed in one of the previous claims.

6. Molded body as claimed in Claim 5, wherein the following applies for the volume Vₘᵢₙ of a minimum convex envelope of the molded body and for the surface Aₘᵢₙ of the minimum convex envelope:
(Vₘᵢₙ)^{2/3} / Aₘᵢₙ > 1/20, particularly > 1/10.

7. Molded body as claimed in Claim 5 or 6, wherein the following applies for the volume Vₖ of the molded body and for the surface Aₖ of the molded body: (Vₖ)^{2/3} / Aₖ > 1/30, particularly > 1/20, preferably Aₖ > 1/15.

8. Electronic device, particularly a measuring device, which has at least a housing with at least an interior space that contains an electronic circuit, wherein the device has at least one gas path via which water vapor can enter the housing, **characterized in that** the device has at least a molded body as claimed in one of the Claims 6 to 8.

9. Electronic device as claimed in Claim 8, wherein the molded body is arranged in the interior space.

10. Electronic device as claimed in Claim 8 or 9, wherein the device has a relative pressure sensor for measuring the difference between a fluid pressure and an atmospheric pressure in the environment of the sensor, wherein the device has an atmospheric pressure path in order to subject the pressure sensor to the atmospheric pressure, wherein the atmospheric pressure path extends, in particular, through the molded body.

11. Electronic device as claimed in one of the Claims 9 to 10, wherein the volume of the molded body is not less than 20%, preferably not less than 40% and particularly preferably not less than 60% of the free volume of the interior space.

12. Procedure for producing a molded body as claimed in one of the Claims 5 to 7, comprising the following steps:
Production of a dispersion which contains particles of a polymer to form a polymer matrix and zeolite;
Molding from the dispersion; and
Solidification of the molded body.

## Revendications

1. Matériau composite, constitué
d'une matrice de polymère ; et
de zéolite, laquelle est liée dans la matrice de polymère ;
la fraction volumique de zéolite par rapport au volume du matériau composite étant d'au moins 50 %, notamment d'au moins 65 %, la matrice de polymère présentant un polymère, qui est sélectionné dans un groupe de polymères constitué de plastiques fluorés.

2. Matériau composite selon la revendication 1 ou 2, pour lequel la zéolite comprend une zéolite du type A, notamment une zéolite 4A ou 3A.

3. Matériau composite selon l'une des revendications précédentes, pour lequel la densité moyenne du matériau à l'état sec n'est pas supérieure à 1,7 g/cm³, notamment pas supérieure à 1,5 g/cm³.

4. Matériau composite selon l'une des revendications précédentes, pour lequel la densité de tassement de la zéolite dans le matériau n'est, à l'état sec, pas inférieure à 0,8 g/cm³, notamment pas inférieure à 1,0 g/cm³.

5. Corps de forme, comprenant un matériau composite selon l'une des revendications précédentes.

6. Corps de forme selon la revendication 5, pour lequel s'applique, pour le volume Vₘᵢₙ d'un corps de forme d'une enveloppante convexe minimale et pour la surface Aₘᵢₙ de l'enveloppante convexe minimale, la formule suivante : (Vₘᵢₙ)^{2/3} / Aₘᵢₙ> 1/20, notamment > 1/10.

7. Corps de forme selon la revendication 5 ou 6, pour lequel s'applique, pour le volume Vₖ du corps de forme et pour la surface Aₖ du corps de forme, la formule suivante :
(Vₖ)^{2/3} / Aₖ > 1/30, notamment > 1/20, de préférence Aₖ > 1/15.

8. Appareil électronique, notamment un appareil de mesure, qui comprend au moins un boîtier avec au moins un espace intérieur, lequel contient un circuit électronique, l'appareil comportant au minimum un passage de gaz par l'intermédiaire duquel de la vapeur d'eau peut parvenir dans le boîtier, **caractérisé en ce que** l'appareil présente au moins un corps de forme selon l'une des revendications 6 à 8.

9. Appareil électronique selon la revendication 8, pour lequel le corps de forme est disposé dans l'espace intérieur.

10. Appareil électronique selon la revendication 8 ou 9, pour lequel l'appareil comprend un capteur de pression relative destinée à mesurer la différence entre une pression du produit et une pression atmosphérique dans l'environnement du capteur, l'appareil comportant un passage de pression atmosphérique afin de soumettre le capteur de pression à la pression atmosphérique, le passage de pression atmosphérique s'étendant notamment à travers le corps de forme.

11. Appareil électronique selon l'une des revendications 9 à 10, pour lequel le volume du corps de forme ne constitue pas moins de 20 %, de préférence pas moins de 40 % et particulièrement de préférence pas moins de 60 % du volume libre dans l'espace intérieur.

12. Procédé destiné à la fabrication d'un corps moulé selon l'une des revendications 5 à 7, comprenant les étapes suivantes :
Fabrication d'une dispersion, laquelle comprend des particules d'un polymère destinées à former une matrice de polymère et de la zéolite ;
Formage à partir de la dispersion ; et
Durcissement du corps de forme.
